# EUROPEAN PATENT SPECIFICATION

(11) **EP 0 679 817 B1**
(45) Date of publication and mention of the grant of the patent: **29.12.1999**
(21) Application number: 95106211.6
(22) Date of filing: 25.04.1995
(51) Int. Cl.: F16D 66/02

(54) **Drum brake device**
Trommelbremse
Frein à tambour

(30) Priority: 26.04.1994 JP 11056194
(43) Date of publication of application: 02.11.1995
(73) Proprietor: NISSHINBO INDUSTRIES INC., Chuo-ku, Tokyo (JP)
(72) Inventor: Tanaka, Takao, c/o Nisshinbo Ind. Inc. Nagoya, Nagoya-shi, Aichi (JP)
(74) Representative: Sajda, Wolf E., Dipl.-Phys.

(56) References cited:
- EP-A- 0 429 110
- EP-A- 0 519 340
- DE-A- 3 027 578
- GB-A- 1 586 200

## Description

The invention relates to a drum brake device that facilitates an external visual inspection in order to find out about the degree of wear in the brake linings, and of the code that indicates the quality and other features of the brake shoe. In particular, the invention relates to such a drum brake device where it is not necessary to dismantle related parts or the device.

A decision to install new brake shoes because of excessive wear in the linings is generally based on the distance travelled and the age of the old brake shoes, but these features cannot be absolute criteria since the amount of wear will vary with the conditions of use and other factors.

Known methods to accurately determine the amount of wear include the dismantling of the brake drum for a direct examination of the lining, or to mold a continuous shoulder on both sides of the lining of the brake shoe in order to indicate the wear threshold limit value. In another conventional method, a coloured strip is molded to be used as a marker from which the state of wear can be ascertained (Japanese utility model publication 1974-29346).

Brake shoes are also coded in order to identify the manufacturer, the material, any guarantee, type or other codes, which are collectively referred to as a code hereinafter, in order to prevent the assembly of foreign parts, for advertising purposes, to satisfy legal requirements, or other reasons.

The European patent application EP-A 0 429 110 discloses means for identification of vehicle brake linings comprising depressions formed in the edge of the lining parallel to the braking surface. The number, shape, spacing or size of the depressions determine a code from which the lining can be identified.

In conventional brake shoe devices of the type mentioned above, various problems arise.
a) The brake drum must usually be dismantled in order to determine the amount of wear of the lining or to read the code marked on the brake shoes, wherein such a dismantling and re-assembly is cumbersome.
b) The molding of a shoulder on the narrow side face of the lining makes it difficult to stamp the code, making it necessary that the code be marked somewhere other than on a side face.
c) An external visual inspection of a code marked as described above usually necessitates the drilling of a further hole separate from the usual hole for inspecting of brake lining wear.
d) A line or coloured strip on the side face of a lining in order to indicate the wear threshold limit value cannot be used as the code described above. This necessitates separate markings for each function, again requiring additional time and labour.

The object underlying the present invention is to provide a drum brake device that facilitates an external visual inspection of the degree of wear in a brake lining, and of the code marked on the brake shoe.

According to the present invention, a drum brake device is provided as defined in claim 1. The drum brake device comprises at least one coloured strip, located on one or both side faces of the brake lining, that visually confirms the amount of wear in the brake lining, and a code superimposed on the coloured strip, that indicates the type of material or any other characteristics of the brake drum lining.

In a further embodiment of the drum brake device, the coloured strip borders that portion of the lining which after continued use of the drum brake is the most abraded portion of the lining. In another specific embodiment, the coloured strip has a depth which is equivalent to the operative abradable volume or area of the brake drum lining.

According to a further embodiment of the brake drum device according to the invention, an inspection hole is bored in the backplate, covering the side face of the brake shoe, or in the brake drum, at a location facing the coloured strip formed on the lining.

The inspection hole bored in the backplate is used to visually examine the coloured strip, and the code thereof, marked on the interior lining of the brake, wherein the coloured strip ascertains the amount of wear in the lining, and the code checks the quality, type and other features of the brake shoe lining.

In operation, the coloured strip is consumed with wear in the lining, and the amount of the coloured strip that remains thereon is used to determine the state of the lining. When the lining reaches its wear threshold limit value, the coloured strip is no longer visible, and the brake shoe should be replaced. When the brake shoe has been replaced, the inspection hole can be used to visually examine the code on the coloured strip in order to easily check externally whether any foreign parts have been assembled.

By means of the drum brake device according to the invention, the following advantages are achieved:
- Both the amount of lining wear and code marked on the brake shoe can be accurately determined by an external visual examination through an inspection hole. This enables an accurate determination as to when the brake shoe should be replaced, and also facilitates a check of the assembly with respect to the proper parts.
- On the side face of the lining, no shoulder is formed or necessary so that it is easier in the device of the present invention to form coloured strips with codes.
- Both the coloured strip to visually ascertain the amount of lining wear and the brake shoe code can efficiently be produced in one and the same operation.
- The drum brake device is a general-purpose device which is applicable to various different types of brake shoes or different types of brakes in which the wear threshold limit value of the lining varies.
- The coloured strips and codes in the device according to the invention can be coordinated with existing inspection holes eliminating the need of boring any separate or additional inspection hole.
- Several coloured strips and codes can be formed along the center of the lining. This enables a service person to bond the lining to the brake shoe in any direction in order to facilitate the fabrication or maintenance of the brake.

The invention will be explained in more detail with reference to various embodiments in the accompanying drawings, wherein
- Fig. 1: is a perspective view of the drum brake device according to a first embodiment in which a portion of the device has been omitted;
- Fig. 2: is a cross section view of the peripheral edge of the drum brake device according to the embodiment;
- Fig. 3: is a plan view of the drum brake device according to the embodiment;
- Fig. 4: is an expanded diagram of a portion of a brake shoe;
- Fig. 5: is an expanded diagram of a portion of a brake shoe in order to explain another embodiment of the invention in which the coloured strip has a different depth.

### Embodiment 1

A first embodiment of the invention will now be explained with reference to the accompanying drawings.

### Drum Brake Device

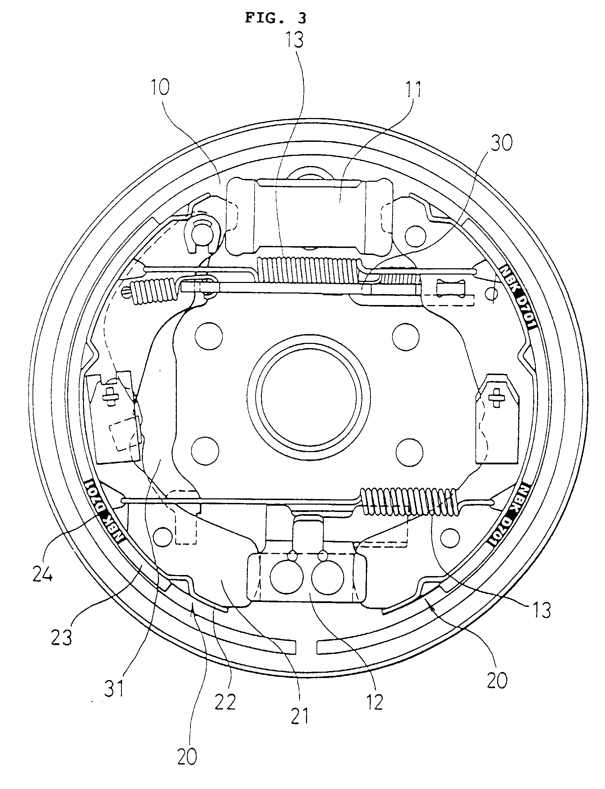

Fig. 3 is a plan view of a leading-trailing type of a drum brake device, wherein the brake drum is omitted from the figure for clarity reasons. A backplate 10 is affixed to a nonrotating part of the wheel. A pair of brake shoes 20 is mounted on the backplate 10 in such a manner that they are able to expand and contract, respectively. That is, the one end of each brake shoe 20 abuts against a brake cylinder 11, and the other end of each brake shoe 20 abuts against an anchor 12 set on the backplate 10. Return springs 13 are tensioned between the two brake shoes 20, wherein the brake shoes 20 open and expand as the (hydraulic) brake cylinder 11 expands, or close and contract due to the action of the return springs 13.

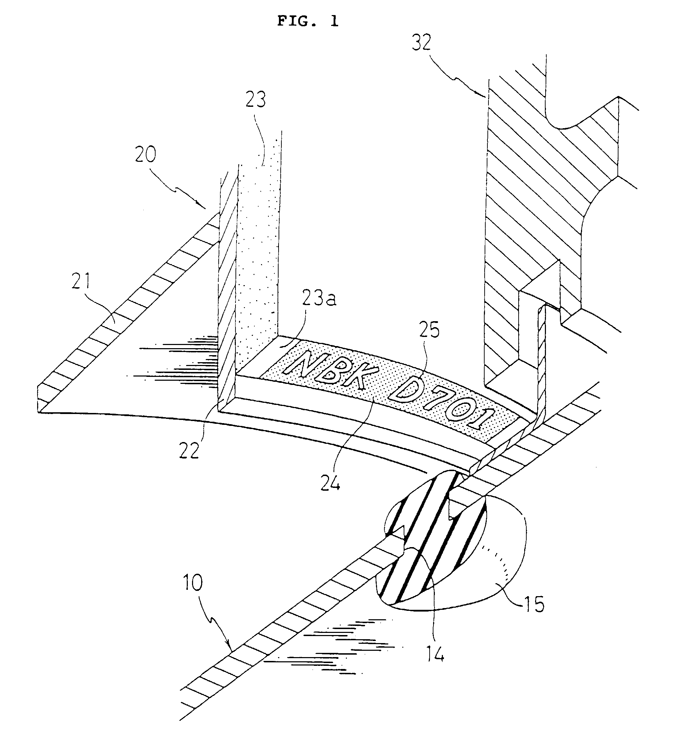

On the side of the brake cylinder 11, an automatic clearance adjustment mechanism 30 is set between the two brake shoes 20, which adjustment mechanism 30 automatically adjusts the clearance between the brake shoes 20 and a brake drum 32 (see Fig. 1) as a function of the amount of wear in a lining 23 of the brake shoe 20. This adjustment mechanism 30 is not restricted to a strut type as shown in the diagram, but can be of any conventional configuration.

The drum brake device is also equipped with a mechanically-acting mechanism, comprising a brake lever 31 pivotally mounted to the brake shoe 20 shown on the left side of Fig. 3, wherein the counterclockwise rotation of the brake lever 31 causes the pair of brake shoes 20 to open and expand. This mechanism is not restricted to the type as shown in the diagram, and any conventional mechanism can be used. The components of the drum brake device are explained in detail below.

### Brake Shoe

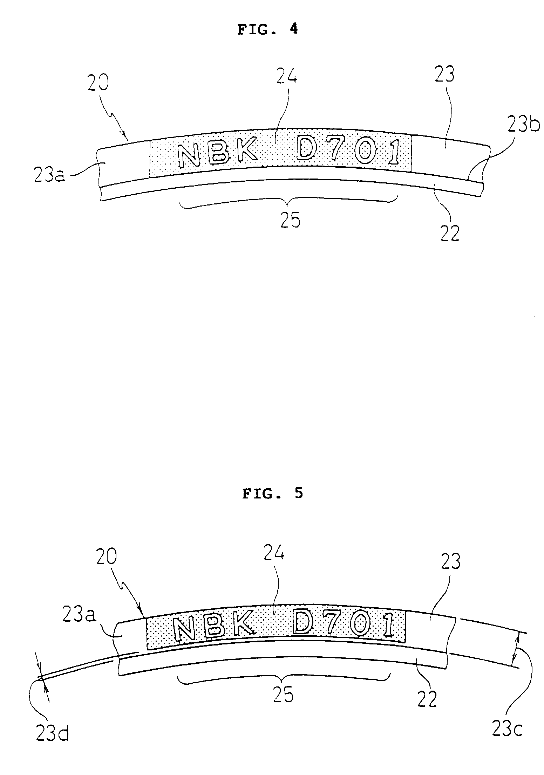

Each brake shoe 20 is formed of a shoe web 21 bonded to the inner circumference of an arc-shaped rim 22 in a T-shape configuration in cross section, and a lining 23 bonded on the external circumference thereof. At least one coloured strip 24 is provided on one side face 23a of the lining 23, and a code 25 is superimposed on the coloured strip 24 to form an integrated unit. As shown in Fig. 4 of the drawings, the coloured strip 24 borders the location of the wear threshold limit value 23b which is equal to the thickness of the lining 23.

In order to mark the code 25 on the coloured strip 24, the code 25 can be reversely printed such that it is displayed in the ground colour of the lining 23 on the coloured strip 24, or the code 25 can be painted in a different colour than the coloured strip 24.

Basically, the coloured strip 24 should be a colour that can be visually and positively differentiated from the lining 23 and the code 25, and the code 25 should have a colour that can be visually and positively differentiated from the coloured strip 24. Any conventional fluorescent paint can be mixed with the paint for the coloured strip 24 and the code 25. This will enable a service person to visually examine the status of the brake even at dark places.

A normal hot stamp method can be used as means to form the coloured strip 24 on the lining 23. For this purpose, a pigment is mixed with a glue or other adhesive, and the mixture is applied in a thin film onto a polyethylene strip. This strip is laid coloured-side down against the side face 23a, then pressed with a hot metal mold, wherein the colour is transferred to the side face 23a. In such a case, the code 25 can be applied simultaneously as follows:
(a) For a reverse printing of the code, that portion of the metal press corresponding to the code is depressed, wherein upon pressing the mold, the colour will be transferred only to those portions of the strip not containing the code.
(b) For a coloured code, the code 25 is applied in a different colour by a second hot stamp pressing on top of the transferred coloured strip 24.

The coloured strip 24 can be displayed on one side face 23a or both side faces of the lining 23. Also, since the wear threshold limit value or most abradable portion of the lining 23 will vary with the shape of the brake, it is essential that the coloured strip 24 be positioned to correspond to the wear threshold limit value or maximum abradable portion of the lining for a particular brake.

### Visual Inspection Hole

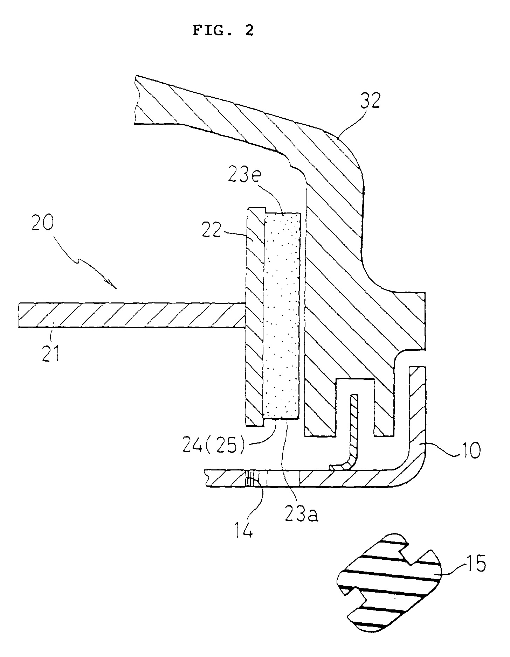

As shown in Fig. 1 and Fig. 2, in the drum brake device of the present embodiment an inspection hole 14 is bored at the required position on the backplate 10 corresponding to the wear threshold limit value or maximum abradable portion of the lining 23. This inspection hole 14 enables a visual inspection of the amount of wear in the lining 23. Since the coloured strip 24 and the code 25 are positioned so that they correspond to the wear threshold limit value or maximum abradable portion of the lining, they can visually be inspected through the inspection hole 14, wherein no additional hole need be bored.

Such an inspection hole 14 is usually covered by a grommet 15 in order to prevent the penetration of water and dust, which grommet 15 can be removed to visually examine the coloured strip 24 and the code 25. The inspection hole 14 is not restricted to an existing hole, and a further hole can be bored in the backplate 10 in a position facing the coloured strip 24 and the code 25.

### Embodiment 2

Fig. 5 shows another embodiment of the invention in which the coloured strip 24 covers a depth which is equivalent to the operative abradable area 23c. In this embodiment, a contingency margin 23d is left between the rim 22 and the inner edge of the coloured strip 24.

The contingency margin 23d is left to allow for a margin of safety in replacing the brake shoe 20, and to accommodate cases where items such as rivets or bolts used to affix the lining 23 to the rim 22, protrude from the surface of the rim 22.

This second embodiment differs from the first embodiment only in the depth of the coloured strip 24 and otherwise is identical to embodiment 1 with respect to the configuration and the effectiveness of use.

### Embodiment 3

The first embodiment relates to a device of the invention which is a leading-trailing type drum brake which combines hydraulic and mechanical action. However, the invention is not restricted to this type of a drum brake, and it can be applied to a drum brake that applies a hydraulic, mechanical, or pneumatic action, or a combination thereof, or a two-leading type (2L type), a two-trailing type (2T type), a dual-two-leading type (D2L type), a duo-servo type (DS type), a uni-servo type (US type), or any other type of internally-expanding, externally-contracting or band-type drum brake.

### Embodiment 4

In the brake shoe 20 of embodiments 1 to 3, the section of the rim 22 which is parallel to the sliding face of a brake drum 32, is welded to the section of the web 21 that is perpendicular to the sliding face of the brake drum 32 to form a T-shape configuration in cross section, and the lining 23 is bonded to the external circumference of the rim 22. However, the brake shoe 20 is not restricted to this configuration, and can also be (a) of a type where the web 21 and the rim 22 are bonded to form a L-shape cross section, (b) a type where a rim 22 is bonded to two side-by-side webs 21 to form two "T's" in cross section, or (c) a type where the rim 22 and the web 21 are integrally molded.

### Embodiment 5

The inspection hole is not restricted to the backplate 10, but can also be bored in the brake drum 32. In this case, the inspection hole is bored at a location facing the coloured strip 24 and the code 25 marked on the other side face 23e of the lining 23.

### Embodiment 6

As shown in connection with the brake shoe 20 on the right hand side of Fig. 3, several coloured strips 24 can be displayed on one side face 23a of the lining 23. In this case, the coloured strips 24 should be formed symmetrically to the center of the lining 23, which will eliminate the need for bonding the lining 23 to the rim 22 of the brake shoe 20 in a certain direction, thus facilitating the fabrication process.

## Claims

1. A drum brake device which brakes a vehicle by frictionally engaging a drum (32) that rotates around brake shoes (20), the brake shoes (20) mounted on a back plate (10) and operated by a brake cylinder (11) to expand and contract, said device comprising:
a code (25) that indicates the type of material or other characteristics of the brake lining (23) on the brake shoes (20),
characterized in that
at least one coloured strip (24) is provided on one or both side faces (23a) of the brake lining (23), which visually confirms the amount of wear of the brake lining (23), and
said code (25) is superimposed on the coloured strip (24).

2. The drum brake device according to Claim 1, wherein the coloured strip (24) borders that portion of the lining (23) which after continued use of the drum brake is the most abraded portion of the lining (23).

3. The drum brake device according to Claim 1 or 2, wherein the coloured strip (24) has a depth which is equivalent to the operative abradable volume or area of the lining (23).

4. The drum brake device according to Claim 1, 2 or 3, further comprising an inspection hole (14) formed in the back plate (10) or a portion of the drum (32) covering a side face of the brake shoe (20), the hole (14) located to face the coloured strip (24) formed on the lining (23).

## Patentansprüche

1. Trommelbremseneinrichtung, die ein Fahrzeug durch einen reibungsmäßigen Eingriff mit einer Trommel (32) bremst, die sich um Bremsbacken (20) herum dreht, wobei die Bremsbacken (20) an einer Grundplatte (10) angebracht sind und von einem Radzylinder (11) zur Spreizung und Kontraktion betätigt werden; wobei die Einrichtung folgendes aufweist:
einen Code (25), der den Materialtyp oder andere Eigenschaften des Bremsbelags (23) auf den Bremsbacken (20) anzeigt;
dadurch gekennzeichnet,
daß mindestens ein Farbstreifen (24), der den Verschleißgrad des Bremsbelags (23) visuell bestätigt, an einer oder beiden Seitenflächen (23a) des Bremsbelags (23) vorgesehen ist und
daß der Code (25) dem Farbstreifen (24) überlagert ist.

2. Trommelbremseneinrichtung nach Anspruch 1,
wobei der Farbstreifen (24) an den Bereich des Belags (23) angrenzt, der nach fortgesetztem Gebrauch der Trommelbremse der am stärksten abgeriebene Bereich des Belags (23) ist.

3. Trommelbremseneinrichtung nach Anspruch 1 oder 2,
wobei der Farbstreifen (24) eine Tiefe hat, die dem wirksamen abreibbaren Volumen oder Bereich des Belags (23) äquivalent ist.

4. Trommelbremseneinrichtung nach Anspruch 1, 2 oder 3,
die ferner ein Inspektionsloch (14) aufweist, das in der Grundplatte (10) oder einem Bereich der Trommel (32) ausgebildet ist, der eine Seitenfläche der Bremsbacke (20) abdeckt, wobei das Loch (14) so positioniert ist, daß es dem auf dem Belag (23) ausgebildeten Farbstreifen (24) zugewandt ist.

## Revendications

1. Dispositif de frein à tambour pour freiner un véhicule par contact de friction avec un tambour (32) qui tourne autour de patins de frein (20), les patins de frein (20) étant montés sur une plaque arrière (10) et actionnés par un cylindre de frein (11) de manière à se dilater et se contracter, ledit dispositif comprenant :
un code (25) qui indique le type de matière ou d'autres caractéristiques de la garniture de frein (23) sur les patins de frein (20),
caractérisé en ce que :
au moins une bande colorée (24) est prévue sur une face latérale ou les deux faces latérales (23a) de la garniture de frein (23), et elle confirme visuellement le degré d'usure de la garniture de frein (23), et
ledit code (25) est superposé à la bande colorée (24).

2. Dispositif de frein à tambour selon la revendication 1, dans lequel la bande colorée (24) borde la partie de la garniture (23) qui est, après une utilisation continue du frein à tambour, la partie d'abrasion maximale de la garniture (23).

3. Dispositif de frein à tambour selon la revendication 1 ou 2, dans lequel la bande colorée (24) a une profondeur qui est équivalente au volume ou à la zone d'abrasion utile de la garniture (23).

4. Dispositif de frein à tambour selon la revendication 1,2 ou 3, comprenant en outre un trou d'inspection (14) formé dans la plaque arrière (10) ou une partie du tambour (32) couvrant une face latérale du patin de frein (20), le trou (14) étant situé en regard de la bande colorée (24) formée sur la garniture (23).
